# FASCICULE DE BREVET EUROPEEN

(11) **EP 2 644 373 B1**
(45) Date de publication et mention de la délivrance du brevet: **03.09.2014**
(21) Numéro de dépôt: 13161150.1
(22) Date de dépôt: 26.03.2013
(51) Int. Cl.: B32B 9/02, B32B 5/02, B32B 5/26, E04B 1/88

(54) **Matériau composite isolant acoustiquement et thermiquement**
Schall-und Wärmedämmverbundwerkstoff
Sound and thermal insulating composite material

(30) Priorité: 30.03.2012 FR 1252904
(43) Date de publication de la demande: 02.10.2013
(73) Titulaire: Muzyrya, Oleg, 1006 Lausanne (CH)
(72) Inventeur: Muzyrya, Oleg, 1006 Lausanne (CH)
(74) Mandataire: Bugnion Genève

(56) Documents cités:
- WO-A1-2010/056372
- CN-Y- 201 317 135
- GB-A- 2 102 037

## Description

La présente invention concerne un matériau composite isolant acoustiquement et thermiquement.

Dans la construction immobilière, automobile, aéronautique, ferroviaire et navale, on utilise depuis longtemps des isolants thermiques et acoustiques. Souvent ces isolants sont faits de laines minérales ou autres produits qui peuvent être nocifs lors de leur manipulation et/ou de leur utilisation ou lors de la destruction. La prise de conscience de ces inconvénients a poussé les constructeurs de se diriger vers l'utilisation des isolants d'origine naturelle. Néanmoins, si ces nouveaux isolants sont neutres du point de vue écologique ils ne donnent pas toujours satisfaction en termes de résistance à l'humidité, de résistance thermique et de longévité. On cherche sans cesse à fabriquer des isolants d'origine naturelle et plus particulièrement végétale répondant au mieux aux contraintes précitées.

WO 2010/056372 A1 divulgue une structure de panneau de plafond comprenant un mat ignifuge. Le dit mat ignifuge comprend un élément constitutif en fibres naturelles traitées par un produit ignifuges et un matériau liant des fibres. Les fibres naturelles sont à sélectionner parmi une liste dans laquelle figurent notamment les fibres de chanvre et de jute. Le panneau présente par ailleurs des propriétés d'isolation acoustique.

Pour éviter toute interprétation erronée nous indiquons nos définitions de quelques termes techniques.

On appelle « fibre » une substance filamenteuse présentant une longueur (ou « taille ») plus de 10 fois supérieure à sa plus grande dimension dans un plan transversal quelconque, les plans transversaux étant les plans coupant la fibre perpendiculairement à la direction de sa longueur.

La taille moyenne d'un ensemble de fibres est la moyenne arithmétique des longueurs de ces fibres.

On appelle « film » une feuille, généralement souple, d'une épaisseur inférieure à 1 mm.

On appelle « non tissé » un feutre composé de fibres végétales, synthétiques, ou artificielles d'un poids allant de 15 à 1500 g/m2 et d'une épaisseur allant de 0.5 à 25 mm et réalisée par voie sèche, humide ou papetière.

On appelle « plaque rigide » une feuille d'une épaisseur supérieure à 5mm.

Un objectif de la présente invention est de fournir un matériau isolant répondant, aux nouvelles contraintes de performances thermiques et acoustiques.

A cet effet, l'invention propose un matériau composite isolant thermiquement et acoustiquement.

Le matériau composite isolant selon l'invention est caractérisé par le fait qu'il comprend au moins une première couche appelée âme, que ladite âme est un nappé comprenant au moins des fibres de jute et de chanvre et des agents de liage, qu'en pourcentages en masse par rapport à la masse de l'âme, les fibres de jute varient entre 20 et 75%, les fibres de chanvre entre 20 et 75% et les agents de liage entre 5 et 30%.

Le déposant est titulaire d'une demande de brevet FR 11 53942 concernant un matériau isolant composite utilisant essentiellement de fibres de lin. Les éléments isolants ainsi obtenus présentent une faible rigidité et leur manipulation et leur utilisation dans certaines applications n'est pas très aisée sans l'adjonction d'un élément plus rigide.

En revanche les fibres de jute à densité équivalente à d'autres fibres végétales, par exemple au lin, permettent d'obtenir des produits plus rigides et une meilleure tenue mécanique. On peut bien sûr utiliser les fibres cueillies dans un champ de culture de jute pour fabriquer le produit isolant mais on peut aussi procéder au recyclage de sacs de jute utilisés habituellement pour le stockage de certains produits comme les fèves de café ou de cacao ou autres denrées alimentaires. On procède d'abord au défibrage de sacs de jute et ensuite on recycle les fibres de jute pour fabriquer le matériau isolant. En résumé les fibres de jute apportent au produit isolant une meilleure rigidité, une meilleure résistance à l'eau et une grande résistance à la décomposition. En plus le jute est une barrière de protection contre l'attaque microbienne du végétal.

En effet, de par sa nature chimique, le jute est une matière extrêmement résistante à divers agents chimiques et à la dégradation biologique et utiliser un isolant comprenant de fibres de jute et de fibres de chanvre permet de combiner les effets bénéfiques de deux fibres en fonction des applications et du milieu dans lequel les matériaux isolants seront utilisés. Les fibres de chanvre à densité équivalente à d'autres fibres végétales, par exemple au lin, permettent d'obtenir des produits plus rigides et une meilleure tenue mécanique.

Selon une exécution le matériau composite comprend au moins une deuxième couche appelée face, que ladite face est un nappé aiguilleté comprenant en pourcentages en masse par rapport à la masse de la face 5 à 100% de fibres de jute et/ou de chanvre et/ou du lin et/ou d'autres fibres végétales.

L'âme d'un tel matériau qui est un nappé fait de fibres de chanvre et de jute peut malgré tout dans certains cas présenter une rigidité insuffisante. Cette âme se présente sous la forme d'un rouleau ou d'un panneau. Le fait d'ajouter des faces faites d'un nappé aiguilleté thermoliées au collées à l'âme, qui est simplement ou de préférence est doublement aiguilleté, lui permet d'augmenter la rigidité. La composition du matériau permet d'absorber l'humidité ambiante et la restituer lorsque les conditions atmosphériques le permettent. Le fait de travailler avec une âme et une face permet d'améliorer l'isolation acoustique et thermique et supprime tout affaissement dans le temps en pose verticale.

Selon une variante d'exécution, l'âme est située entre deux faces parallèles.

Selon une autre exécution la ou les faces comprennent aussi des agents de liage.

Les agents de liage sont choisis parmi des fibres de polyester bicomposant, des fibres en polyéthylène, des fibres en polypropylène, des fibres thermoliantes à base d'amidon végétal, des poudres thermoplastiques, des résines ou un mélange d'au moins deux de ces agents.

Selon une exécution préférée une face au moins est revêtue d'un film et un non tissé comprenant de fibres végétales ou synthétiques ou artificielles.

Dans le but de répondre à certaines exigences liées à une utilisation spécifique du matériau isolant, une face au moins comprend un agent pulvérisé lui conférant des caractéristiques d'étanchéité à l'eau ou à la vapeur ou l'humidité ou de résistance au feu ou d'accroche.

Selon une variante d'exécution, une face au moins est revêtue d'un film et/ou d'un non tissé comprenant de fibres végétales ou synthétiques ou artificielles.

De préférence les fibres de jute et de chanvre présentent une taille moyenne comprise entre 10 et 100 mm.

L'invention concerne aussi un élément de construction pour bâtiment ou pour véhicule automobile ou ferroviaire ou pour bâtiment naval ou pour aéronef incorporant moins une couche du matériau tel que défini précédemment.

L'aiguilleté utilisé pour les faces présente une densité allant de 400g/m2 à 2000g/m2.

De préférence, les fibres de jute et de chanvre sont présentes dans l'âme sont une teneur comprise respectivement entre 20 et 75 %, entre 20 et 75%, de préférence encore entre 30 et 55 %, en pourcentages en masse par rapport à la masse totale du matériau composite isolant.

Selon une réalisation particulière, l'âme comprend, en pourcentages en masse par rapport à la masse totale dudit matériau,
- plus de 60 %, de préférence plus de 80 % et/ou moins de 95 %, de préférence moins de 90% de fibres.
- Les fibres de jute et de chanvre présentent une taille moyenne de préférence supérieure à 15 mm, de préférence supérieure à 30 mm et/ou inférieure à 100 mm, inférieure à 80 mm,
- L'agent liant dans l'âme présente une température de fusion inférieure à 200°C et/ou supérieure à 100°C.

L'agent liant présent dans le matériau composite isolant a une teneur supérieure à 2 %, de préférence supérieure à 10%, voire supérieure à 15 %, et/ou inférieure à 50 %, de préférence inférieure à 40 %, inférieure à 30 %, inférieure à 20 %, en pourcentages en masse par rapport à la masse totale de l'âme.

De préférence, les fibres de jute et de chanvre représentent ensemble plus de 80 %, plus de 90 %, voire plus de 95 %, de la masse totale du matériau. De préférence, les fibres de jute et de chanvre, l'agent liant, représentent ensemble 100% de la masse totale du matériau composite isolant

Un matériau selon l'invention peut prendre différentes formes, et peut notamment se présenter sous la forme d'un produit souple apte à être enroulé, dit « produit enroulable », ou plus rigide, sous la forme d'un panneau.

Un matériau enroulable selon l'invention présente une épaisseur avant enroulement de préférence supérieure à 15 mm, supérieure à 20 mm, supérieure à 30 mm, de préférence supérieure à 40 mm, voire supérieure à 45 mm et/ou, de préférence, inférieure à 500 mm, inférieure à 400 mm, inférieure à 300 mm, inférieure à 250 mm, voire inférieure à 200 mm.

Un matériau enroulable selon l'invention présente une longueur de préférence supérieure à 1 m, supérieure à 2 m, supérieure à 3 m, voire supérieure à 4 m et/ou, de préférence, inférieure à 15 m, inférieure à 12 m, inférieure à 10 m, voire inférieure à 9 m.

Un matériau enroulable selon l'invention présente une largeur de préférence supérieure à 0,30 m, supérieure à 0,45 m, supérieure à 0,55 m et/ou, de préférence, inférieure à 1 m, inférieure à 0,90 m, inférieure à 0,75 m, voire inférieure à 0,65 m.

De préférence, un matériau enroulable selon l'invention présente encore une densité supérieure à 10 kg/m³, de préférence supérieure à 20 kg/m³, de préférence supérieure à 30 kg/m³, et/ou inférieure à 120 kg/m³, de préférence inférieure à 60 kg/m³ et notamment inférieure à 40 kg/m³.

Un panneau selon l'invention présente une épaisseur de préférence supérieure à 30 mm, supérieure à 70 mm, supérieure à 100 mm et/ou, de préférence, inférieure à 600 mm, inférieure à 400 mm, inférieure à 300 mm, inférieure à 200 mm.

Un panneau selon l'invention présente une longueur de préférence supérieure à 0,70 m, supérieure à 0,90 m, supérieure à 1,10 m, supérieure à 1,20 m et/ou, de préférence, inférieure à 3 m, inférieure à 2 m, inférieure à 1,50 m, inférieure à 1,30 m.

Un panneau selon l'invention présente une largeur de préférence supérieure à 0,30 m, supérieure à 0,45 m, supérieure à 0,55 m et/ou, de préférence, inférieure à 1 m, inférieure à 0,90 m, inférieure à 0,75 m, voire inférieure à 0,65 m.

Un panneau selon l'invention une densité de préférence supérieure à 20 kg/m³, de préférence supérieure à 30 kg/m³, de préférence supérieure à 40 kg/m³ et inférieure à 200 kg/m³ de préférence inférieure à 150 kg/m³ et notamment inférieure à 50 kg_{/m}³_{.}

Selon une réalisation particulière, l'invention se présente sous la forme d'un panneau en matériau composite isolant selon l'invention présentant une grande face, voire deux grandes faces, revêtue(s), au moins partiellement, d'un film, de préférence un film étanche à la vapeur d'eau. Ledit film peut être avantageusement choisi parmi un film composite, de préférence souple, par exemple un film en papier kraft-aluminium, un film non-tissé, un frein vapeur, un film plastique. De préférence, ledit film est en papier kraft-aluminium.

Selon une autre de réalisation particulière, ledit matériau composite isolant est lié, notamment au niveau d'au moins une de ses grandes faces, par exemple par collage, soudage à chaud, ultra-sons, couture ou toute autre méthode adaptée, à au moins une plaque rigide. La plaque rigide peut être choisie parmi des plaques de plâtre, de gypse, de bois, de bois composite, ou de panneaux de particules. Ces matériaux permettent de fabriquer des panneaux de contreventement, de finition, de protection contre les diverses projections, de résistance au feu.

Un élément de construction selon l'invention peut se présenter sous la forme d'une superposition de couches, au moins une des couches étant en matériau composite isolant conforme à l'invention et au moins une des couches étant en un matériau complémentaire.

Un tel élément peut en outre présenter une grande face, voire deux grandes faces, revêtue(s), au moins partiellement, d'un film tel que défini précédemment.

L'élément de construction incorporant au moins une couche de matériau peut être utilisé pour le bâtiment, pour les véhicules automobiles ou ferroviaires ou pour un bâtiment naval ou pour un aéronef en particulier pour assurer une isolation thermique et/ou acoustique.

## Revendications

1. Matériau composite isolant acoustiquement et thermiquement, comprenant au moins des fibres de jute et de chanvre et des agents de liage, **caractérisé par le fait qu'**il comprend au moins une première couche appelée âme, que ladite âme est un nappé comprenant au moins lesdites fibres de jute et de chanvre et des agents de liage, qu'en pourcentages en masse par rapport à la masse de l'âme, les fibres de jute varient entre 20 et 75%, les fibres de chanvre entre 20 et 75% et les agents de liage entre 5 et 30%.

2. Matériau selon la revendication 1, caractérisé qu'il comprend au moins une deuxième couche appelée face thermoliée ou collée à l'âme, que ladite face est un nappé aiguilleté comprenant en pourcentages en masse par rapport à la masse de la face 5 à 100% de fibres de jute et/ou de chanvre et/ou du lin et/ou d'autres fibres végétales.

3. Matériau selon la revendication 2, **caractérisé par le fait que** l'âme est située entre deux faces parallèles.

4. Matériau selon l'une des revendications 2 ou 3, **caractérisé par le fait que** la ou les faces comprennent aussi des agents de liage.

5. Matériau selon l'une des revendications 1 à 4, **caractérisé par le fait que** les agents de liage sont choisis parmi des fibres de polyester bicomposant, des fibres en polyéthylène, des fibres en polypropylène, des fibres thermoliantes à base d'amidon végétal, des poudres thermoplastiques, des résines ou un mélange d'au moins deux de ces agents.

6. Matériau selon l'une de revendications 2 à 5, **caractérisé par le fait qu'**une face au moins est revêtue d'un film et un non tissé comprenant de fibres végétales ou synthétiques ou artificielles.

7. Matériau selon l'une de revendications 2 à 6, **caractérisé par le fait qu'**une face au moins comprend un agent pulvérisé lui conférant des caractéristiques d'étanchéité à l'eau ou à la vapeur ou l'humidité ou de résistance au feu ou d'accroche.

8. Matériau selon l'une de revendications 2 à 7, **caractérisé par le fait qu'**une face au moins est revêtue d'un film et/ou d'un non tissé comprenant de fibres végétales ou synthétiques ou artificielles.

9. Matériau selon l'une des revendications 1 à 8, **caractérisé par le fait que** les fibres de jute et de chanvre présentent une taille moyenne comprise entre 10 et 100 mm.

10. Elément de construction pour bâtiment ou pour véhicule automobile ou ferroviaire ou pour bâtiment naval ou pour aéronef incorporant au moins une couche du matériau selon l'une des revendications 1 à 9.

## Patentansprüche

1. Schall- und Wärmedämmverbundwerkstoff, der mindestens Jute- und Hanffasern und Bindemittel umfasst, **dadurch gekennzeichnet, dass** er mindestens eine erste, als Seele bezeichnete Schicht umfasst, dass die Seele eine Lage ist, die mindestens die Jute- und Hanffasern und Bindemittel umfasst, dass in Massenanteilen die Jutefasern zwischen 20 und 75 %, die Hanffasern zwischen 20 und 75 % und die Bindemittel zwischen 5 und 30 % im Verhältnis zur Masse der Seele schwanken.

2. Werkstoff nach Anspruch 1, **dadurch gekennzeichnet, dass** er mindestens eine zweite Schicht umfasst, die als mit der Seele thermisch verbundene oder verklebte Fläche bezeichnet wird, dass die Fläche eine benadelte Lage ist, die in Massenanteilen im Verhältnis zur Masse der Fläche 5 bis 100 % Jutefasern und/oder Hanffasern und/oder Leinenfasern und/oder sonstige Pflanzenfasern umfasst.

3. Werkstoff nach Anspruch 2, **dadurch gekennzeichnet, dass** sich die Seele zwischen zwei parallelen Flächen befindet.

4. Werkstoff nach einem der Ansprüche 2 oder 3, **dadurch gekennzeichnet, dass** die Seite(n) auch Bindemittel umfasst/umfassen.

5. Werkstoff nach einem der Ansprüche 1 bis 4, **dadurch gekennzeichnet, dass** die Bindemittel aus den Zweikomponenten-Polyesterfasern, den Polyethylenfasern, den Polypropylenfasern, den wärmebindenden Fasern auf Basis pflanzlicher Stärke, den thermoplastischen Pulvern, den Harzen oder einem Gemisch aus mindestens zwei dieser Stoffe ausgewählt sind.

6. Werkstoff nach einem der Ansprüche 2 bis 5, **dadurch gekennzeichnet, dass** mindestens eine Fläche mit einer Folie und einem Vliesstoff bedeckt ist, der Pflanzen- oder synthetische oder Kunstfasern umfasst.

7. Werkstoff nach einem der Ansprüche 2 bis 6, **dadurch gekennzeichnet, dass** mindestens eine Fläche ein pulverisiertes Mittel umfasst, das ihr Dichtigkeitseigenschaften gegenüber Wasser oder Dampf oder Feuchtigkeit oder Feuerfestigkeitseigenschaft oder Widerstandsfähigkeit gegenüber Hängenbleiben verleiht.

8. Werkstoff nach einem der Ansprüche 2 bis 7, **dadurch gekennzeichnet, dass** mindestens eine Fläche mit einer Folie und/oder einem Vliesstoff bedeckt ist, der Pflanzen- oder synthetische oder Kunstfasern umfasst.

9. Werkstoff nach einem der Ansprüche 1 bis 8, **dadurch gekennzeichnet, dass** die Jute- und Hanffasern eine durchschnittliche Größe zwischen 10 und 100 mm inklusive aufweisen.

10. Bauelement für das Bauwesen oder für ein Kraft- oder Schienenfahrzeug oder ein Schiff oder ein Luftfahrzeug, das mindestens eine Schicht des Werkstoffs nach einem der Ansprüche 1 bis 9 integriert.

## Claims

1. An acoustic and thermal insulating composite material, comprising at least jute and hemp fibres, and binding agents, **characterised in that** it comprises at least one first layer known as the core, and **in that** the said core is a web comprising of at least the said jute and hemp fibres and the binding agents, and **in that** in percentages by weight relative to the weight of the core, the jute fibres vary between 20% and 75%, the hemp fibres between 20% and 75% and the binding agents between 5% and 30%.

2. A material according to claim 1, **characterised in that** it comprises at least one second layer known as the face that is thermobonded or stuck to the core, and **in that** the said surface is a needled web comprising in percentages by weight relative to the weight of the face 5% to 100% of jute fibres, and / or hemp fibres, and / or flax fibres, and / or other plant fibres.

3. A material according to claim 2, **characterised in that** the core is located between two parallel faces.

4. A material according to one of claims 2 or 3, **characterised in that** the face or faces also include the binding agents.

5. A material according to one of claims 1 to 4, **characterised in that** the binding agents are selected from among polyester bicomponent fibres, polyethylene fibres, polypropylene fibres, vegetable starch based thermobonding fibres, thermoplastic powders, resins or a mixture of at least two of these agents.

6. A material according to one of claims 2 to 5, **characterised in that** at least one face is coated with a film and a nonwoven material comprising of plant fibres, or synthetic or artificial fibres.

7. A material according to one of claims 2 to 6, **characterised in that** at least one face comprises a sprayed agent that confers it with sealing properties making it impermeable to water or steam or moisture, as well as qualities of fire resistance and adherence.

8. A material according to one of claims 2 to 7, **characterised in that** at least one face is coated with a film and / or a nonwoven material comprising of plant fibres, or synthetic or artificial fibres.

9. A material according to one of claims 1 to 8, **characterised in that** the jute and hemp fibres present an average size of between 10 and 100 mm.

10. A construction element for building or for automotive or railway vehicles or for naval vessels or for aircraft incorporating at least one layer of the material according to one of claims 1 to 9.
